Europäisches Patentamt

European Patent Office

Office européen des brevets

(11) Veröffentlichungsnummer: **0 017 279**

**A1**

(12) # EUROPÄISCHE PATENTANMELDUNG

(21) Anmeldenummer: **80200251.9**

(22) Anmeldetag: **20.03.80**

(51) Int. Cl.³: **F 02 F 3/00**

(30) Priorität: **10.04.79 DE 2914456**

(43) Veröffentlichungstag der Anmeldung:
**15.10.80 Patentblatt 80/21**

(84) Benannte Vertragsstaaten:
**AT DE FR GB IT**

(71) Anmelder: **KARL SCHMIDT GmbH**
**Christian-Schmidt-Strasse 8/12**
**D-7107 Neckarsulm(DE)**

(72) Erfinder: **Schieber, Gerhard**
**Lerchenstrasse 7**
**D-7107 Bad Wimpfen(DE)**

(74) Vertreter: **Fischer, Ernst, Dr.**
**Reuterweg 14**
**D-6000 Frankfurt am Main 1(DE)**

(54) **Gebauter Kolben für Brennkraftmaschinen.**

(57) Bei einem gebauten Kolben für Brennkraftmaschinen ist das Unterteil (1) mit dem aus einem Eisenwerkstoff bestehenden Oberteil (6) durch einen Schraubring (8) verbunden.

Um die in den Verbrennungsgasen enthaltene Energie zu senken, ragt der mit dem Unterteil verschraubte Schraubring (8) mit einem auf seiner Innenseite befindlichen Bund (11) in eine am Oberteil des Kolbens befindliche Eindrehung (12) unter Bildung eines Spaltes (13) mit ihrer axial verlaufenden Fläche hinein und ist mit seiner kolbenschaftseitigen Fläche (15) gegen die gegenüberliegende Fläche der Eindrehung (12) verspannt.

Fig.1

EP 0 017 279 A1

KARL SCHMIDT GMBH
Christian-Schmidt-Straße 8/12
7107 Neckarsulm

04.04.1979
-DRQ/GKP-

Prov. Nr. 8400 KS

Gebauter Kolben für Brennkraftmaschinen
--------------------------------------------

Gegenstand der Erfindung ist ein gebauter Kolben für Brennkraftmaschinen, dessen Unterteil mit dem aus einem Eisenwerkstoff bestehenden Oberteil über einen zentrierenden Schraubring verbunden ist.

Mit dem elektrischen Zündfunken beim Ottomotor oder dem Einspritzen des Kraftstoffes in die hochkomprimierte Luft des Kompressionsraumes des Dieselmotors wird die Verbrennung des zugeführten Kraftstoffes im Kolbenmotor eingeleitet. Die zuvor in chemischer Form gebundene Energie wird zunächst durch die Verbrennung nahezu vollkommen in Wärme- und Druckenergie, dann jedoch mit Hilfe des Kolbens und des Triebwerkes zu rund einem Drittel in mechanische Energie umgewandelt. Die restlichen zwei Drittel der zugeführten Energie gehen bekanntlich aus hier nicht näher erläuterten thermodynamischen Gründen zu ungefähr gleichen Teilen im Kühlmittel und in den Auspuffgasen verloren.

Es besteht ein erhebliches Interesse der Fachwelt, den den Kühlmitteln zugeführten Energieanteil der Verbrennungsgase so niedrig wie möglich zu halten. Dies könnte durch einen den Kolbenboden bildenden Werkstoff erreicht werden, der eine geringe Wärmeleitfähigkeit aufweist, jedoch gleichzeitig eine hohe Temperaturfestigkeit besitzt und gegen mechanische Beanspruchung unempfindlich ist. Die bisher für diesen Verwendungszweck bekannten Werkstoffe werden diesen Anforderungen nicht gerecht. So sind keramische Werkstoffe nicht optimal hinsichtlich ihrer mechanischen Beanspruchbarkeit, während hochtemperaturfeste Stähle eine vergleichsweise hohe Wärmeleitung besitzen.

Es ist die Aufgabe der vorliegenden Erfindung, den Kolben der eingangs genannten Bauart so auszubilden, daß der Teil der in den Verbrennungsgasen enthaltenen und an die Kühlmittel abgegebenen Energie wesentlich gesenkt wird.

Die Lösung dieser Aufgabe besteht darin, daß der an seinem unteren Randbereich mit einem Innengewinde und an seinem oberen Randbereich mit einem Innenbund versehene Schraubring in der Weise am oberen, eine entsprechende Eindrehung aufweisenden Rand des Kolbenunterteils aufgeschraubt ist, daß der in eine entsprechende Eindrehung am oberen Rand des Kolbenoberteils hineinragende Innenbund mit der axial verlaufenden Fläche der Eindrehung einen Spalt bildet und mit seiner kolbenschaftseitigen Fläche gegen die korrespondierende Fläche der Eindrehung verspannt ist.

Durch diese Maßnahmen wird die relativ gute Wärmeleitfähigkeit des aus einem Eisenwerkstoff bestehenden Kolbenoberteils so kompensiert, daß die zur Wärmeleitung notwendigen Kontaktflächen nicht nur in einem dem Brennraum entfernten Bereich angebracht, sondern auch vergleichsweise klein sind.

Nach einem weiteren Merkmal der Erfindung ist die Ringnute für die Aufnahme des ersten Verdichtungsrings im Hinblick auf einen möglichst kleinen Ringspalt zwischen

0017279

Feuersteg und Zylinderlaufbahn in der Zone des Innenbundes wenig unterhalb der Feuerstegoberkante angeordnet.
Eine solche Maßnahme ist nur möglich, weil die Kontaktflächen zwischen dem Kolbenoberteil und dem Schraubring
vermindert und damit die Funktionsfähigkeit des Verdichtungsrings nicht beeinträchtigt wird.

Um die Wärmeleitung weiter herabzusetzen, ist es angebracht, zwischen der kolbenschaftseitigen Spannfläche
des Innenbundes des Schraubrings und der Eindrehung
des Kolbenoberteils eine wärmedämmende Einlage einzufügen.

Zur weiteren Herabsetzung der Wärmeleitung kann zwischen
dem Kolbenober- und Kolbenunterteil eine wärmedämmende
Scheibe oder Ring, z.B. bestehend aus keramischen Werkstoffen, eingelegt sein. Bei Verwendung einer Scheibe
kann diese zur Abtrennung des im Kolbenoberteil befindlichen Hohlraums vom gekühlten Unterteil dienen.

Um ein Eindringen bzw. Vordringen der Verbrennungsgase
in den zwischen der axialen Innenfläche des Innenbundes
und der gegenüberliegenden Fläche der Eindrehung
bestehenden Spalt zu vermeiden, besitzt der Innenbund
an seiner oberen Kante eine den Spalt gegenüber den
Brennraum abdeckende Nase.

Es ist auch möglich, in dem Spalt Dichtelemente anzuordnen.

Im Rahmen der zweckmäßigen Ausbildung der Erfindung,
ist die der kolbenschaftseitigen Fläche des Innenbundes
des Schraubrings gegenüberliegende Fläche der Eindrehung zentrierend gestaltet, um eine verschiebungssichere Zentrierung der Bauteile zu erhalten.

In den Zeichnungen ist die Erfindung beispielhaft dargestellt und nachfolgend näher erläutert:

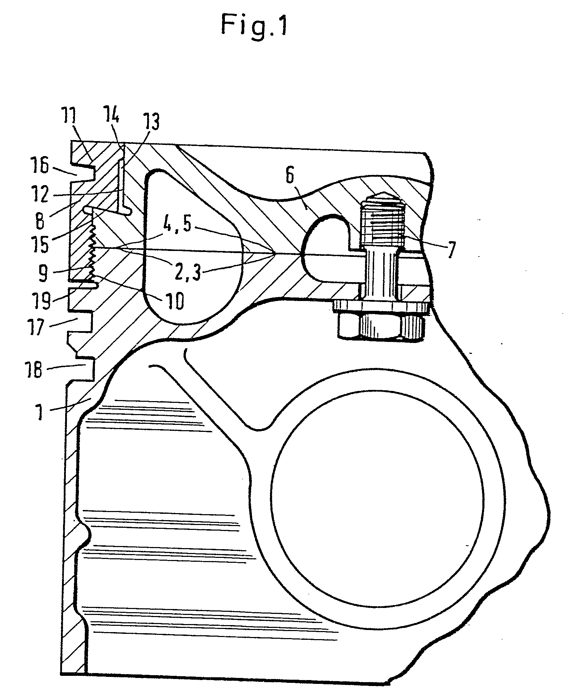

Fig. 1 zeigt einen gebauten Kolben für eine Diesel-Brennkraftmaschine mit direkter Einspritzung des Kraftstoffs. Das Kolbenunterteil 1 stützt sich über die umlaufenden Rippen 2, 3 an korrespondierenden Rippen 4, 5 des Kolbenoberteils 6 ab. Beide Kolbenbauteile sind über die Zentralverschraubung 7 miteinander verspannt. Der Schraubring 8 besitzt auf der Innenseite des unteren Randes ein Innengewinde 9, mit dem dieser auf der am oberen Rand des Kolbenunterteils 1 befindlichen Eindrehung 10 aufgeschraubt ist. Der obere Rand des Schraubrings 8 ist mit einem Innenbund 11 versehen, der in die am oberen Rand des Kolbenoberteils 6 angeordnete Eindrehung 12 hineinragt. Zwischen der axial verlaufenden Fläche des Innenbundes 11 und der gegenüberliegenden Fläche der Eindrehung 12 ist ein Spalt 13 vorhanden, der gegenüber dem Brennraum durch die an der Oberkante des Innenbundes 11 angeordnete Nase 14 verschlossen ist. Die kolbenschaftseitige Ringfläche 15 des Innenbundes 11 ist gegen die korrespondierende Fläche der Eindrehung verspannt. In der Zone des Innenbundes 11 ist die Ringnute 16 für den ersten Verdichtungsring wenig unterhalb der Feuerstegoberkante angebracht. Die Ringnuten 17, 18 für den zweiten Verdichtungsring und den Ölabstreifring sind im Kolbenunterteil 1 angeordnet. Durch die zur Kolbenachse 2 geneigt verlaufende Anordnung der kolbenschaftseitigen Ringfläche 15 des Innenbundes 11 und der korrespondierenden Fläche der Eindrehung wird beim Verspannen der Kolbenbauteile 1, 6 eine zentrierende Wirkung erzielt. Zwischen der kolbenschaftseitigen Fläche 19 des Schraubrings 8 und dem ersten Ringsteg besteht keine Verbindung.

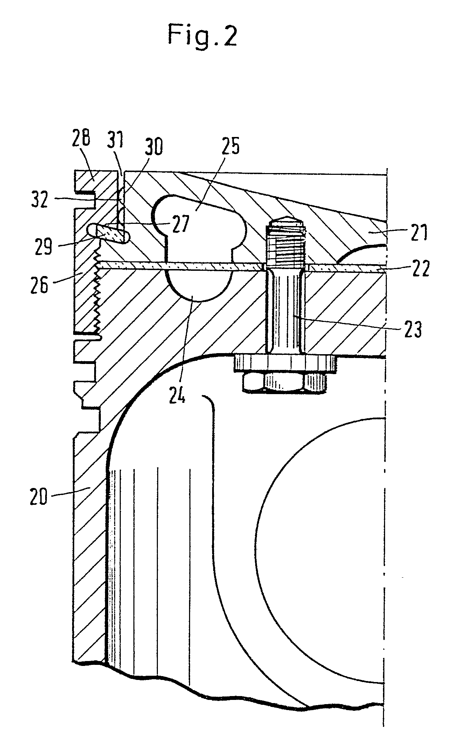

In Fig. 2 ist ein gebauter Kolben dargestellt, bei dem Unter- 20 und Oberteil 21 unter Einfügung einer wärmedämmenden Scheibe 22 in der Trennebene über mehrere Schrauben 23 gegeneinander verspannt sind. Durch die wärmedämmende Scheibe 22 wird gleichzeitig eine Abtrennung der Hohlräume 24 des Kolbenunterteils 20 von den Hohlräumen 25 des Oberteils 21 erreicht. Bei dem auf Kolbenober- und -unterteil aufgeschraubten Schraubring 26 ist zwischen der kolbenschaftseitigen Ringfläche 27 des Innenbundes 28 ein Ring 29 aus wärmedämmendem Material eingefügt. Der zwischen der axialen Ringfläche des Innenbundes 28 und der gegenüberliegenden Fläche der Eindrehung 30 des Oberteils befindliche Spalt 31 ist durch Dichtelemente 32 verschlossen.

PATENTANSPRÜCHE
----------------

1. Gebauter Kolben für Brennkraftmaschinen, dessen Unterteil mit dem aus einem Eisenwerkstoff bestehenden Oberteil über einen zentrierenden Schraubring verbunden ist, dadurch gekennzeichnet, daß der an seinem unteren Randbereich mit einem Innengewinde (9) und an seinem oberen Randbereich mit einem Innenbund (11, 28) versehene Schraubring (8, 26) in der Weise am oberen, eine entsprechende Eindrehung (10) aufweisenden Rand des Kolbenunterteils (1, 20) aufgeschraubt ist, daß der in eine entsprechende Eindrehung (12, 30) am oberen Rand des Kolbenoberteils (6, 21) hineinragende Innenbund mit der axial verlaufenden Fläche der Eindrehung einen Spalt (13, 31) bildet und mit seiner kolbenschaftseitigen Ringfläche (15, 27) gegen die korrespondierende Fläche der Eindrehung verspannt ist.

2. Kolben nach Anspruch 1, dadurch gekennzeichnet, daß die Ringnute (16) für die Aufnahme des ersten Verdichtungsrings in der Zone des Innenbundes (11, 28) wenig unterhalb der Feuerstegoberkante angeordnet ist.

3. Kolben nach den Ansprüchen 1 und/oder 2, dadurch gekennzeichnet, daß zwischen der kolbenschaftseitigen Ringfläche (27) des Innenbundes (28) des Schraubrings (26) und der Eindrehung (30) des Kolbenoberteils (21) eine wärmedämmende Einlage (29) eingefügt ist.

4. Kolben nach einem oder mehreren der Ansprüche 1 bis 3, dadurch gekennzeichnet, daß zwischen dem Kolbenober- (21) und Kolbenunterteil (20) eine wärmedämmende Scheibe (22) oder wärmedämmender Ring eingelegt ist.

5. Kolben nach einem oder mehreren der Ansprüche 1 bis 4, dadurch gekennzeichnet, daß der Innenbund (11) an seiner oberen Kante eine den Spalt (13) gegenüber dem Brennraum abdeckende Nase (14) besitzt.

6. Kolben nach einem oder mehreren der Ansprüche 1 bis 4, dadurch gekennzeichnet, daß in dem Spalt (31) gegenüber dem Brennraum abdichtende Dichtelemente (32) angebracht sind.

7. Kolben nach einem oder mehreren der Ansprüche 1 bis 6, dadurch gekennzeichnet, daß die der kolbenschaftseitigen Fläche (15, 27) des Innenbundes (11, 28) gegenüberliegenden Fläche der Eindrehung (12, 30) zentrierend gestaltet ist.

Fig.1

Fig.2

Europäisches
Patentamt

# EUROPÄISCHER RECHERCHENBERICHT

Nummer der Anmeldung

EP 80 20 0251.9

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | F 02 F 3/00 |
| X | <u>FR - A - 462 490</u> (STE DUJARDIN & CIE)<br>* Seite 1, Zeilen 44 bis 57; Fig., Position 3 *<br><br>-- | 1,7 | |
| | <u>DE - C - 278 074</u> (GÖRLITZER MASCHINEN-<br>BAU UND EISENGIESSEREI)<br>* Seite 1, Zeilen 36 bis 42 *<br><br>-- | 1 | |
| | <u>US - A - 3 136 306</u> (KAMM)<br>* Spalte 2, Zeile 15 und ff; Fig. 1, Position 23 *<br><br>-- | 1,2 | RECHERCHIERTE SACHGEBIETE (Int. Cl.³) |
| | <u>FR - A - 1 337 311</u> (LARAQUE)<br>* Seite 1, Spalte 2, Zeilen 19 bis 25; Fig., Position 11 *<br><br>-- | 3 | F 02 F 3/00<br>F 16 J 1/00 |
| | <u>FR - A - 1 325 722</u> (SILVA)<br>* Seite 1, Spalte 2, Zeilen 9 bis 15; Fig. 1, Positionen 3, 4 *<br><br>-- | 4 | |
| | <u>FR - A - 932 036</u> (MADSEN)<br>* Seite 1, Spalte 1, Absatz 1; Fig., Positionen 13,14 *<br><br>-- | 3,4 | KATEGORIE DER GENANNTEN DOKUMENTE |
| A | <u>DE - C - 731 632</u> (JUNKERS FLUGZEUG- UND MOTORENWERKE)<br>* gesamtes Dokument *<br><br>--<br><br>./.. | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| | | | |
|---|---|---|---|
| X | Der vorliegende Recherchenbericht wurde für alle Patentansprüche erstellt. | | |
| Recherchenort<br>Berlin | Abschlußdatum der Recherche<br>05-06-1980 | Prüfer<br>STÖCKLE | |

EPA form 1503.1  06.78

Europäisches
Patentamt

**EUROPÄISCHER RECHERCHENBERICHT**

| | **EINSCHLÄGIGE DOKUMENTE** | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | <u>DD - A - 106 677</u> (SCHOTT et al.) <br><br> * gesamtes Dokument * <br><br> ---- | | |
| | | | RECHERCHIERTE SACHGEBIETE (Int. Cl.³) |